(19)

Europäisches Patentamt
European Patent Office
Office européen des brevets

(11) **EP 4 566 848 A1**

(12) **EUROPEAN PATENT APPLICATION**

(43) Date of publication:
**11.06.2025 Bulletin 2025/24**

(21) Application number: **24216009.1**

(22) Date of filing: **28.11.2024**

(51) International Patent Classification (IPC):
**B60C 23/00** (2006.01)    **B60W 40/13** (2012.01)
**G01G 19/08** (2006.01)

(52) Cooperative Patent Classification (CPC):
**B60C 23/00; B60W 40/13; G01G 19/086**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 US 202363606716 P
01.10.2024 US 202418903095**

(71) Applicant: **The Goodyear Tire & Rubber Company
Akron, OH 44316 (US)**

(72) Inventors:
• **SINGH, Kanwar Bharat
  Copley, Ohio, 44321 (US)**
• **SON, Roman
  Ettelbruck (LU)**

(74) Representative: **Kutsch, Bernd
  Goodyear S.A.
  Patent Department
  Avenue Gordon Smith
  7750 Colmar-Berg (LU)**

(54) **DYNAMIC TIRE LOAD ESTIMATION USING TIRE MOUNTED FOOTPRINT LENGTH SENSOR**

(57)    Disclosed is a method and a system for calculating or estimating dynamic tire loads from acceleration data. A virtual footprint length is calculated from acceleration data obtained from the inertial unit of the vehicle. Dynamic tire loads or dynamic vehicle load data are calculated from the virtual footprint length that is calculated from the acceleration data obtained from the inertial unit.

FIG. 2

EP 4 566 848 A1

**Description**

BACKGROUND

A footprint length of a tire refers to the length of the portion that makes contact with the road. The footprint length can be a good indicator of numerous features of a tire, such as traction, handling, wear, fuel efficiency, comfort, performance, and load-bearing capacity. The footprint length can vary based on various factors of the tire, such as the vehicle load, pressure, temperature, and wear state of the tire. However, calculating dynamic tire load can also be a useful metric for informing braking calculations, fuel consumption, vehicle stability control determination and other metrics and calculations.

SUMMARY OF THE INVENTION

The invention relates to a method in accordance with claim 1, to a system in accordance with claim 7 and to a non-transitory, computer-readable medium in accordance with claim 12.

Dependent claims refer to preferred embodiments of the invention.

BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.

> FIG. 1A a pictorial diagram of a tire in a forward perspective view showing a portion bisected to demonstrate a sensor within the tire according to various embodiments of the present disclosure.
> FIG. 1B a pictorial diagram of a vehicle illustrating the axes in which acceleration data can be obtained by the inertial unit.
> FIG. 2 is a drawing of a network environment according to various embodiments of the present disclosure.
> FIG. 3 is a flowchart illustrating one example of functionality implemented as portions of an application executed in a computing environment in the network environment of FIG. 2 according to various embodiments of the present disclosure.
> FIG. 4 is a flowchart illustrating one example of functionality implemented as portions of an application executed in a computing environment in the network environment of FIG. 2 according to various embodiments of the present disclosure.

DETAILED DESCRIPTION OF PREFERRED EMBODIMENTS

Disclosed are various approaches for calculating dynamic wheel loads on the wheels of a vehicle. The term dynamic wheel load is a wheel load on a respective wheel and is dependent upon a current or real-time condition of the vehicle. Dynamic wheel loads can be calculated based upon various parameters that can be gathered about the real time status of a vehicle. For example, sprung mass, unsprung mass, a respective distance from a center of gravity of the vehicle and the front and rear axles, a yaw moment of inertia, a track width of the vehicle, a height of the center of gravity, a roll center height, a height of unsprung mass, and other parameters can be utilized to calculate dynamic load on a real-time basis. However, many vehicles are not equipped with a sensor suite that provides a way to gather the above data in real-time to calculate real-time dynamic loads on each of the tires of the vehicle.

However, many vehicles are equipped with tire pressure monitoring system (TPMS) sensors that can gather tire pressure data on a periodic basis. Additionally, many vehicles are also equipped with inertial units that can gather vehicle acceleration data, such a longitudinal acceleration and lateral acceleration data. Acceleration data can be generated and provided on the Controller Area Network bus (CAN bus) of the vehicle so that other systems in communication with the CAN bus can access the data. Additionally, in some examples, periodic tire pressure data can be provided by the TPMS sensors on each wheel of the vehicle to other systems. In some examples, the TPMS sensors can wirelessly communicate with other systems in the vehicle to provide tire pressure data. In other examples, TPMS sensors can provide tire pressure data to the CAN bus of the vehicle.

According to examples of the disclosure, a tire footprint length can be calculated from tire pressure data and acceleration data. Subsequently, dynamic loads on each wheel can be calculated as a function of tire footprint length. Footprint length refers to the length of the portion of the tire that makes contact with the road surface, known as a contact patch. The footprint length measurement can be significant to a tire due to the correlation with contact patch and traction, handling, wear and tire life, fuel efficiency, comfort, performance, and load-bearing capacity. However, the footprint length can vary based on various factors of the tire, such as the vehicle load, inflation pressure of the tire, temperature, and/or other tire factors. In some situations, an increase in inflation pressure decreases the footprint length. Reciprocally, a decrease in inflation pressure increases the footprint length.

Further, in some situations, an increase on the load or weight also increases the footprint length. Reciprocally, a decrease on the load or weight also decreases the footprint length. When these factors change within a tire that is configured to an optimal footprint length, the result is that the tire will be operating under a sub-optimal footprint length. To resolve that, the tire may have to compensate to achieve the desired footprint length that is optimal or other vehicle systems may need to account for the sub-optimal footprint length.

Various methods have been used to calculate the compensated footprint length. However, many methods of calculating a compensated footprint length have previously required knowledge about the load state of the vehicle or at least an estimation for the load of a vehicle because the pressure sensitivity of the footprint length changes with load. For example, previous models could first calculate the load state indicator of a vehicle using the footprint length. That load indicator could then be used in a classification model with the inflation pressure to predict the load state of a vehicle. When the pressure sensitivity for each load state stays relatively constant, we can calculate the compensated footprint length. The compensated footprint length can subsequently be used to calculate dynamic load on each wheel of the vehicle. Footprint length calculations can be made based upon tire pressure data received from TPMS sensors. However, TPMS sensors often only periodically report tire pressure data, whereas dynamic load data is only useful to other vehicle systems if provided substantially in real time. In many vehicle systems, inertial units can provide acceleration data in near real time, such as at 100 Hz.

Therefore, examples of the disclosure can calculate real-time virtual footprint length from real-time acceleration data. From the real-time virtual footprint lengths that are calculated, examples of the disclosure can then estimate dynamic load data for each wheel of the vehicle.

Once dynamic load calculations are made, dynamic load data can be provided to other vehicle systems, such as steering systems, vehicle stability control systems, braking systems, or other vehicle management systems that can improve their respective performance by incorporating real-time dynamic load calculations.

In the following discussion, a general description of the system and its components is provided, followed by a discussion of the operation of the same. Although the following discussion provides illustrative examples of the operation of various components of the present disclosure, the use of the following illustrative examples does not exclude other implementations that are consistent with the principals disclosed by the following illustrative examples.

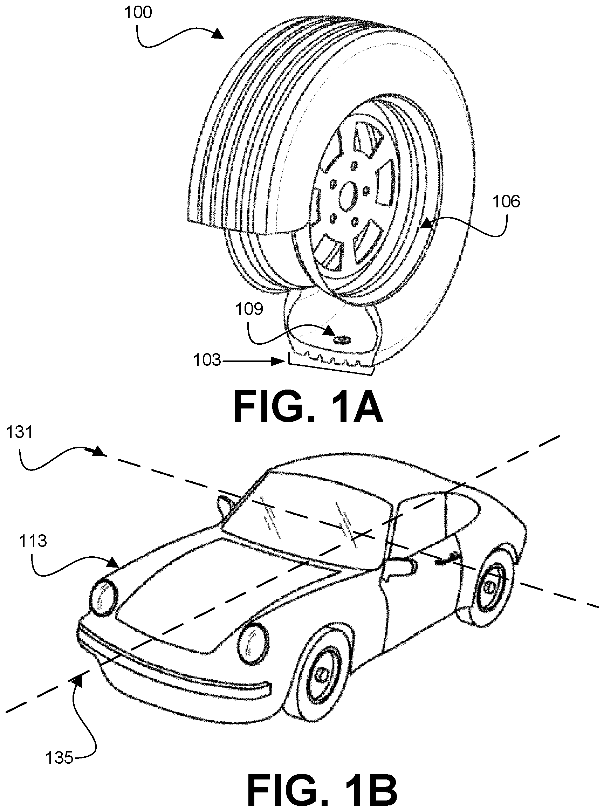

As illustrated in FIG. 1A, shown is an example of a tire 100 as referenced in various embodiments of this disclosure. The tire 100 can incorporate a multi-layered construction from various materials. Each tire 100 includes a pair of sidewalls that extend to a circumferential tread 103, which engages the ground during vehicle operation. When mounted to a wheel 106, a tire 100 can be configured to maintain gasses within an inner cavity between inner walls lateral to the sidewalls, an inner liner laterally attached to the circumferential tread 103, and an inner cavern of the wheel 106. The inner cavity can maintain a varying amount of pressure based at least on the various configurations of the tire, such as tire size (e.g., depth, radius, circumference, etc.), tire materials, and environmental conditions (e.g., environmental temperature, etc.).

The tire 100 can include a sensor 109. The sensor 109 can be affixed to at least one of the inner liner laterally attached the circumferential tread 103 (as shown in FIG. 1A), the inner walls of the tire 100, or the inner portion of the wheel 106. In some embodiments, the sensor 109 can be affixed using an adhesive. In some embodiments, the sensor 109 can be affixed by being embedded within the structure that the sensor 109 is affixed (e.g., the walls of the tire, the wheel 106, etc.).

The sensor 109 can be used to measure a footprint length, an inflation pressure, and a temperature, as well as various other measurements. The sensor 109 can measure footprint length using metric units (e.g., millimeters, centimeters, etc.) or imperial units (e.g., inches, feet, etc.). The sensor 109 can measure inflation pressure in various unit types, such as pounds per square inch (PSI), pascals (Pa) or kilopascals (kPa), bars, atmospheres (ATM), and kilograms per square centimeter ($kg/cm^2$). The sensor 109 can measure temperature in various unit scales, such as Celsius, Fahrenheit, Kelvin, or other temperature scales. In various embodiments, the sensor 109 can be a tire pressure monitoring system (TPMS) sensor.

As illustrated in FIG. 1B, shown is an example of a vehicle 113 as referenced in various embodiments of this disclosure. The vehicle 113 can be fitted with one or more tires 100. The tires 100 can incorporate TPMS sensors, respectively, that report footprint length data and/or tire pressure data. Additionally, an inertial unit of the vehicle 113 can report acceleration data detected in various axes. For example, an inertial unit of the vehicle 113 can report acceleration data that is detected in a longitudinal axis 135 and a lateral axis 131. By utilizing the acceleration data along with footprint length data reported by the sensor 109 in respective tires 100 of the vehicle 113, examples of the disclosure can calculate dynamic load data that is occurring at each wheel of the vehicle 113.

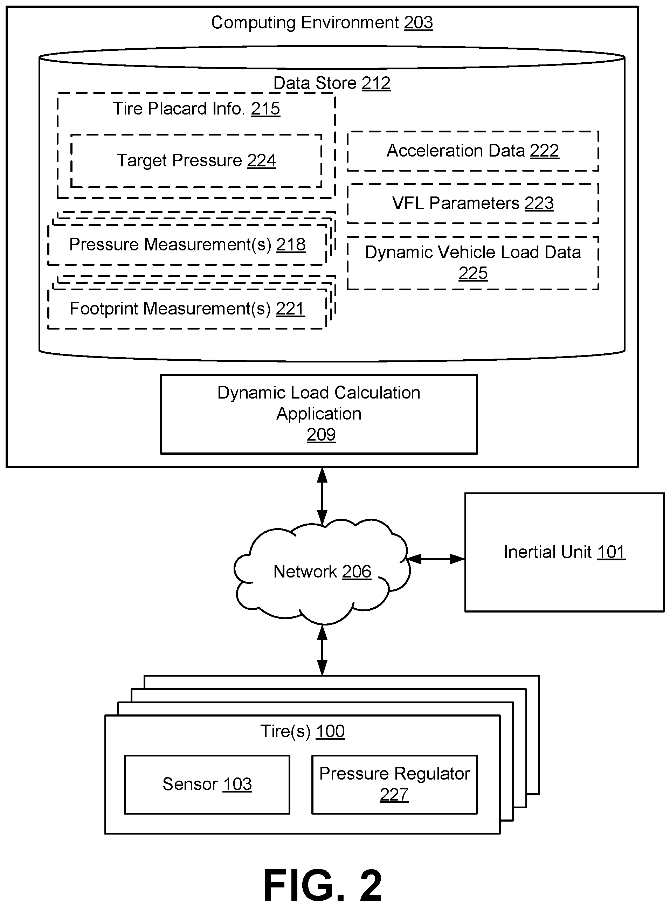

With reference to FIG. 2, shown is a network environment 200 according to various embodiments. The network environment 200 can include a computing environment 203, one or more tires 100, and an inertial unit 101 which can be in data communication with each other via a network 206. In one example, the network environment 200 can comprise a vehicle 113 in which multiple computing devices are in communication over a vehicle CAN bus or other wired or wireless networks.

The network 206 can include a vehicle CAN bus, wide area networks (WANs), local area networks (LANs), personal area networks (PANs), or a combination thereof. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (i.e., WI-FI®), BLUETOOTH° networks, microwave transmission networks, as well as other networks relying on radio broadcasts. The network 206 can also include a combination of two or more networks 206. Examples of networks 206 can include the Internet, intranets, extranets, virtual private networks (VPNs), and similar networks.

The inertial unit 101 can provide lateral acceleration data and longitudinal acceleration data detected within a vehicle. The acceleration data can be provided by one or more accelerometers that can detect acceleration data. The inertial unit 101 can publish or otherwise provide acceleration data in one or more axes, such as a lateral axis 131 and a longitudinal axis 135 of the vehicle 113.

The computing environment 203 can include one or more computing devices that include a processor, a memory, and/or a network interface. For example, the computing devices can be configured to perform computations on behalf of other computing devices or applications. As another example, such computing devices can host and/or provide content to other computing devices in response to requests for content. As another example, such computing devices can be a central computing device installed within a vehicle. Moreover, the computing environment 203 can employ a plurality of computing devices that can be arranged in one or more server banks or computer banks or other arrangements. Such computing devices can be located in a single installation or can be distributed among many different geographical locations. For example, the computing environment 203 can include a plurality of computing devices that together can include a hosted computing resource, a grid computing resource or any other distributed computing arrangement. In some cases, the computing environment 203 can correspond to an elastic computing resource where the allotted capacity of processing, network, storage, or other computing-related resources can vary over time.

Various applications or other functionality can be executed in the computing environment 203. The components executed on the computing environment 203 include a dynamic load calculation application 209, and other applications, services, processes, systems, engines, or functionality not discussed in detail herein.

The dynamic load calculation application 209 can be executed to perform various actions. In various embodiments, the dynamic load calculation application 209 can calculate dynamic loads on one or more wheels or tires of the vehicles based upon data received from the sensor 109 in the respective tires 100 and from the inertial unit 101 of the vehicle 113. In some examples, the dynamic load calculation application 209 can receive uncompensated footprint length data from the sensor 109. The dynamic load calculation application 209 can convert the uncompensated footprint length data to compensated footprint length data, in some examples.

The dynamic load calculation application 209 can generate one or more functions based upon observed footprint length data obtained from the sensor 109 of the tires 100. A first function can comprise a function from which real time footprint length data, or virtual footprint length data, can be calculated from observed acceleration data received from an inertial unit 101 of the vehicle 113. A second function can comprise a function from which dynamic load data can be calculated from the virtual footprint data, which can also be calculated from the observed acceleration data obtained from the inertial unit 101 of the vehicle 113.

The first function can be generated by the dynamic load calculation application 209 and can comprise a function that is customized based upon the conditions of the vehicle 113. Temperature, tire pressures, suspension parameters, tire condition, and other variables can affect the footprint length of the various tires 100 of the vehicle 113. Accordingly, the dynamic load calculation application 209 can enter a parameter learning phase, which can be performed upon startup of the vehicle 113 or during an initial operation period of the vehicle 113, such as the first few minutes of the vehicle's operation upon startup.

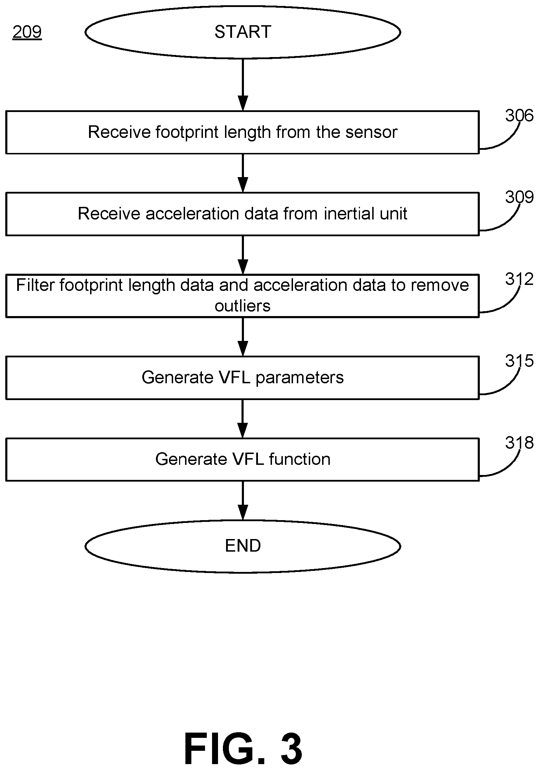

The parameter learning phase can generate constants that can be summed and/or multiplied with acceleration data obtained in the lateral axis 131 and/or longitudinal axis 135 from the inertial unit 101. The constants can form a function from which virtual footprint length data can be calculated from real-time acceleration data obtained from the inertial unit 101. The parameter learning phase and the function generated by the dynamic load calculation application 209 is described in further detail in the discussion of FIG. 3.

Additionally, the dynamic load calculation application 209 can utilize the virtual footprint length data, which can be calculated in real time or at the same frequency with which the inertial unit 101 provides acceleration data, to calculate dynamic vehicle load data at each of the wheels. The dynamic vehicle load data can be calculated in real time or at the same frequency with which the inertial unit 101 provides acceleration data in the lateral axis 131 and the longitudinal axis 135 of the vehicle 113.

Various data is stored in a data store 212 that is accessible to the computing environment 203. The data store 212 can be representative of a plurality of data stores 212, which can include relational databases or non-relational databases such as object-oriented databases, hierarchical databases, hash tables or similar key-value data stores, as well as other data storage applications or data structures. Moreover, combinations of these databases, data storage applications, and/or data structures may be used together to provide a single, logical, data store. The data stored in the data store 212 is associated with the operation of the various applications or functional entities described below. This data can include tire placard information 215, pressure measurements 218, footprint measurements 221, acceleration data 222, virtual footprint length parameters 223, dynamic vehicle load data 225, and potentially other data.

The tire placard information 215 can represent information that is relevant to a specified tire 100. For instance, the tire placard information 215 can include the tire size, which is often represented as tire width, aspect ratio, and diameter (e.g., "P215/60R16", etc.). In another example, the tire placard information 215 can include load capacity, spare tire information, tire type, speed rating, and various other information. In various embodiments, the tire placard information 215 can include one or more recommended tire pressures, such as a target pressure 224, a maximum tire pressure, and a minimum tire pressure. A target pressure 224 can represent a tire inflation pressure that is optimal for the tire in standard conditions. The target pressure 224 can be measured in various unit types, such as pounds per square inch (PSI), pascals (Pa) or kilopascals (kPa), bars, atmospheres (ATM), and kilograms per square centimeter ($kg/cm^2$).

The pressure measurements 218 can represent inflation pressure of a tire 100 received from a sensor 109 of the tire 100 over a period of time. The pressure measurements 218 can be measured in various unit types, such as pounds per square inch (PSI), pascals (Pa) or kilopascals (kPa), bars, atmospheres (ATM), and kilograms per square centimeter ($kg/cm^2$). The pressure measurements 218 can be stored by the dynamic load calculation application 209 when a pressure measurement 218 is received from a sensor 109 of a tire 100. Each pressure measurement 218 can be stored in correlation to a time which the pressure measurement 218 was taken and the tire 100 for which the pressure measurement 218 corresponds.

The footprint measurements 221 can represent the footprint length of a tire 100 received from a sensor 109 over a period of time. The footprint measurements 221 can be measured in various unit types, like metric units (e.g., millimeters, centimeters, etc.) or imperial units (e.g., inches, feet, etc.). In at least some embodiments, the footprint measurements 221 can be measured along the center line 115 of a footprint 112 made from a tire 100. The footprint measurements 221 can be stored by the dynamic load calculation application 209 when the footprint measurements 221 are received from a sensor 109 of a tire 100. Each footprint measurement 221 can be stored along with a timestamp corresponding to a time which the footprint measurement 221 was taken. Each footprint measurement 221 can also be stored in association with a tire 100 for which the footprint measurement 221 corresponds. In many examples, a sensor 109 associated with a tire 100 may only provide footprint length measurements periodically, such as once every few seconds. Accordingly, generating dynamic vehicle load data based upon such measurements is not useful for other systems in the vehicle 113 because of the infrequency with which the data is provided by the sensor 109.

The acceleration data 222 can represent acceleration data obtained by the inertial unit 101. The acceleration data can be obtained from the inertial unit 101 on a real-time basis or as frequently as the inertial unit 101 can provide the acceleration data, such as at a clock frequency of the CAN bus. The acceleration data can represent acceleration detected by the inertial unit 101 in the lateral axis 131 and the longitudinal axis 135.

The VFL parameters 223 represent parameters from which a function can be formed to calculate virtual footprint length data from the acceleration data 222 reported by the inertial unit 101. As noted above, the dynamic load calculation application 209 can generate a function during a parameter learning phase that relates acceleration data 222 to virtual footprint length data that can be calculated in real-time or at the same frequency with which acceleration data 222 is reported by the inertial unit 101.

Dynamic vehicle load data 225 represents dynamic vehicle load data that can be calculated from the virtual footprint length data calculated based upon the virtual footprint length parameters 223. In some examples, the dynamic vehicle load data 225 can be associated with each wheel or tire 100 of the vehicle 113. The dynamic vehicle load data 225 can also be associated with a timestamp corresponding to when the corresponding acceleration data 222 used to generate the virtual footprint length data was reported by the inertial unit 101.

Referring next to FIG. 3, shown is a flowchart that provides one example of the operation of a portion of the dynamic load calculation application 209. The flowchart of FIG. 3 provides merely an example of the many different types of functional arrangements that can be employed to implement the operation of the depicted portion of the dynamic load calculation application 209. As an alternative, the flowchart of FIG. 3 can be viewed as depicting an example of elements of a method implemented within the network environment 200. FIG. 3 illustrates how the dynamic load calculation application 209 can determine virtual footprint length parameters 223 from which virtual footprint length and subsequently dynamic vehicle load data 225 can be calculated.

Beginning with block 303, the dynamic load calculation application 209 can receive a footprint length measurement from a sensor 109. In some examples, the footprint length measurement can be received from each sensor 109 corresponding to each of the tire 100 of the vehicle. The sensor 109 can measure footprint length of the tire 100 using metric units (e.g., millimeters, centimeters, etc.) or imperial units (e.g., inches, feet, etc.). The sensor 109 can send the footprint length of the tire 100 to the dynamic load calculation application 209, for which the dynamic load calculation application 209 can receive the footprint length of the tire as the uncompensated footprint length. The dynamic load calculation application 209 can store the uncompensated footprint length as a footprint measurement 221 in the data store 212.

At block 309, the dynamic load calculation application 209 can receive acceleration data 222 from the inertial unit 101. The acceleration data 222 can be associated with a lateral axis 131 and a longitudinal axis 135 of the vehicle and reported to the CAN bus by the inertial unit 101 so that other vehicle systems can access the acceleration data 222.

At block 312, the dynamic load calculation application 209 can filter the acceleration data 222 and the footprint measurements 221 to remote outlier data. Outlier data can represent data samples that are statistical outliers from the remaining data that is being obtained from the sensor 109 of the tire 100 and from the inertial unit 101.

At block 315, the dynamic load calculation application 209 can generate the VFL parameters from which a function can be formed to calculate virtual footprint length data from the acceleration data 222 obtained from the inertial unit 101. In one example, a recursive least squares parameter estimation process can be performed that relates footprint length to acceleration data 222. For example, an equation such as equation 1 can be generated.

$$FPL\_MM = p00 + p10*AX\_G + p01*AY\_G$$

$$(Equation\ 1)$$

In the above example, FPL_MM can represent a footprint measurement 221 received from the sensor 109. AX_G represents acceleration data 222 for a lateral axis 131 of the vehicle 113 at the same timestamp as the footprint measurement 221. AY_G represents acceleration data 222 for a longitudinal axis 135 of the vehicle 113 at the same timestamp as the footprint measurement 221. P00, P10, and P01 represent the virtual footprint length parameters 223 from which the function that calculates virtual footprint length from acceleration data 222 can be formed. A recursive least squares parameter estimation process can be run on the footprint measurement 221 and the acceleration data 222 characterizing the vehicle until the virtual footprint length parameters 223 converge.

Accordingly, at block 318, a function defining virtual footprint length data can be represented by equation 2:

$$VFPL = p00 + p10*AX\_G + p01*AY\_G$$

$$(Equation\ 2)$$

In the above equation 2, VFPL represents virtual footprint length data and can be calculated using acceleration data 222 obtained from the inertial unit 101 in real time or at a higher frequency than the sensor 109 delivers footprint measurements 221. Thereafter, the process can proceed to completion.

The process shown in FIG. 3 can be performed upon vehicle startup or periodically to generate the virtual footprint length parameters 223. The process can also be performed when a tire change or a tire inflation or deflation event is detected by the dynamic load calculation application 209. Additionally, the process can be performed for each tire 100 of the vehicle 113 so that virtual footprint length parameters 223 and a respective VFL function can be generated for each tire 100 of the vehicle 113. In some examples, the sensor 109 can also cease transmission of footprint length data once the parameter learning phase has been completed and once the virtual footprint length parameters 223 have been determined by the dynamic load calculation application 209.

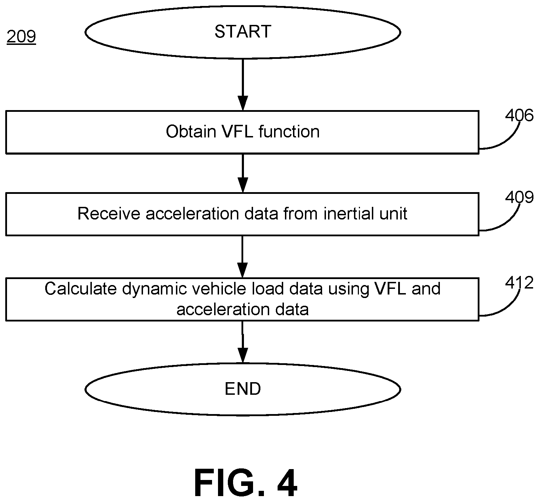

Referring next to FIG. 4, shown is a flowchart that provides one example of the operation of a portion of the dynamic load calculation application 209. The flowchart of FIG. 4 provides merely an example of the many different types of functional arrangements that can be employed to implement the operation of the depicted portion of the dynamic load calculation application 209. As an alternative, the flowchart of FIG. 4 can be viewed as depicting an example of elements of a method implemented within the network environment 200. FIG. 4 illustrates how the dynamic load calculation application 209 can calculate dynamic vehicle load data 225 from the acceleration data 222 obtained from the inertial unit 101.

First, at block 406, the dynamic load calculation application 209 can obtain or generate a VFL function corresponding to a tire 100 of a vehicle 113. The VFL function can be generated from the virtual footprint length parameters 223 calculated in the parameter learning phase described in the discussion of FIG. 3.

At block 409, the dynamic load calculation application 209 can obtain acceleration data 222 from the inertial unit 101 in real time or at a frequency with which the inertial unit 101 reports acceleration data 222 to the CAN bus or the network 206. The acceleration data 222 obtained at block 409 can be additional acceleration data that is obtained after the parameter learning phase has been completed.

At step 412, the dynamic load calculation application 209 can calculate dynamic vehicle load data 225 based upon the virtual footprint length data that can be calculated from the acceleration data 222. The dynamic load calculation application 209 can store the dynamic vehicle load data 225 in the data store 212 or provide the dynamic vehicle load data 225 to other vehicle systems, such as braking systems or stability control systems of the vehicle 113.

In one example, the dynamic vehicle load data 225 can be published on a CAN bus of the vehicle 113 so that other vehicle systems can utilize the dynamic vehicle load data 225.

The process shown in FIG. 4 can be performed for each wheel or tire 100 of the vehicle 113 so that dynamic vehicle load data 225 can be obtained for each tire 100 of the vehicle 113.

A number of software components previously discussed are stored in the memory of the respective computing devices and are executable by the processor of the respective computing devices. In this respect, the term "executable" means a program file that is in a form that can ultimately be run by the processor. Examples of executable programs can be a compiled program that can be translated into machine code in a format that can be loaded into a random-access portion of the memory and run by the processor, source code that can be expressed in proper format such as object code that is capable of being loaded into a random-access portion of the memory and executed by the processor, or source code that can be interpreted by another executable program to generate instructions in a random-access portion of the memory to be executed by the processor. An executable program can be stored in any portion or component of the memory, including random-access memory (RAM), read-only memory (ROM), hard drive, solid-state drive, Universal Serial Bus (USB) flash drive, memory card, optical disc such as compact disc (CD) or digital versatile disc (DVD), floppy disk, magnetic tape, or other memory components.

The memory includes both volatile and nonvolatile memory and data storage components. Volatile components are those that do not retain data values upon loss of power. Nonvolatile components are those that retain data upon a loss of power. Thus, the memory can include random-access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, or other memory components, or a combination of any two or more of these memory components. In addition, the RAM can include static random-access memory (SRAM), dynamic random-access memory (DRAM), or magnetic random-access memory (MRAM) and other such devices. The ROM can include a programmable read-only memory (PROM), an erasable programmable read-only memory (EPROM), an electrically erasable programmable read-only memory (EEPROM), or other like memory device.

Although the applications and systems described herein can be embodied in software or code executed by general purpose hardware as discussed above, as an alternative the same can also be embodied in dedicated hardware or a combination of software/general purpose hardware and dedicated hardware. If embodied in dedicated hardware, each can be implemented as a circuit or state machine that employs any one of or a combination of a number of technologies. These technologies can include, but are not limited to, discrete logic circuits having logic gates for implementing various logic functions upon an application of one or more data signals, application specific integrated circuits (ASICs) having appropriate logic gates, field-programmable gate arrays (FPGAs), or other components, etc. Such technologies are generally well known by those skilled in the art and, consequently, are not described in detail herein.

The flowchart shows the functionality and operation of an implementation of portions of the various embodiments of the present disclosure. If embodied in software, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as a processor in a computer system. The machine code can be converted from the source code through various processes. For example, the machine code can be generated from the source code with a compiler prior to execution of the corresponding application. As another example, the machine code can be generated from the source code concurrently with execution with an interpreter. Other approaches can also be used. If embodied in hardware, each block can represent a circuit or a number of interconnected circuits to implement the specified logical function or functions.

Although the flowchart shows a specific order of execution, it is understood that the order of execution can potentially differ from that which is depicted. For example, the order of execution of two or more blocks may be scrambled relative to the order shown. Also, two or more blocks shown in succession may be executed concurrently or with partial concurrence. Further, in some embodiments, one or more of the blocks shown in the flowchart can be skipped or omitted. In addition, any number of counters, state variables, warning semaphores, or messages might be added to the logical flow described herein, for purposes of enhanced utility, accounting, performance measurement, or providing troubleshooting aids, etc. It is understood that all such variations are within the scope of the present disclosure.

Also, any logic or application described herein that includes software or code can be embodied in any non-transitory computer-readable medium for use by or in connection with an instruction execution system such as a processor in a computer system or other system. In this sense, the logic can include statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. Moreover, a collection of distributed computer-readable media located across a plurality of computing devices (e.g., storage area networks or distributed or clustered filesystems or databases) may also be collectively considered as a single non-transitory computer-readable medium.

The computer-readable medium can include any one of many physical media such as magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium can be a random-access memory (RAM) including static random-access memory (SRAM) and dynamic random-access memory (DRAM), or magnetic random-access memory (MRAM). In addition, the computer-readable medium can be a read-only memory (ROM), a programmable read-only memory (PROM), an erasable programmable read-only memory (EPROM), an electrically erasable programmable read-only memory (EEPROM), or other type of memory device.

Further, any logic or application described herein can be implemented and structured in a variety of ways. For example, one or more applications described can be implemented as modules or components of a single application. Further, one or more applications described herein can be executed in shared or separate computing devices or a combination thereof. For example, a plurality of the applications described herein can execute in the same computing device, or in multiple computing devices in the same computing environment 203.

Clause 1 - A method, comprising: receiving, from a sensor, a plurality of footprint length measurements for a tire; receiving, from an inertial unit, a plurality of acceleration data corresponding to a plurality of axes; filtering the footprint length data to remove statistical outlier data samples; generating virtual footprint length parameters based upon the plurality of footprint length measurements and the acceleration data; and generating a virtual footprint length function from which a virtual footprint length of the tire can be calculated from the acceleration data, the virtual footprint length of the tire being calculated without a footprint length measurement from the sensor.

Clause 2 - the method of clause 1, further comprising: obtaining additional acceleration data from the inertial unit; calculating a dynamic vehicle load associated with the tire based upon the additional acceleration data and the virtual footprint length of the tire.

Clause 3 - the method of clause 2, wherein the additional acceleration data is captured after a parameter learning phase during which the virtual footprint length parameters are generated.

Clause 4 - the method of clause 3, wherein the parameter learning phase is conducted upon vehicle startup until convergence of the virtual footprint length parameters.

Clause 5 - the method of any of clauses 1-4, wherein the virtual footprint length of the tire is calculated at a frequency substantially equivalent to a frequency at which the inertial unit reports the acceleration data.

Clause 6 - the method of any of clauses 1-5, wherein the acceleration data comprises lateral axis acceleration data and longitudinal axis acceleration data.

Clause 7 - the method of any of clauses 1-6, wherein the virtual footprint length parameters are generated using a recursive least squares parameter estimation process to generate the virtual footprint length function.

Clause 8 - The method of any of clauses 1-7, wherein virtual footprint length function relates the acceleration data from the inertial unit to the footprint length of the tire.

Clause 9 - a system, comprising: a computing device comprising a processor and a memory; and machine-readable instructions stored in the memory that, when executed by the processor, cause the computing device to at least: receive, from a sensor, a plurality of footprint length measurements for a tire; receive, from an inertial unit, a plurality of acceleration data corresponding to a plurality of axes; filter the footprint length data to remove statistical outlier data samples; generate virtual footprint length parameters based upon the plurality of footprint length measurements and the acceleration data; and generate a virtual footprint length function from which a virtual footprint length of the tire can be calculated from the acceleration data, the virtual footprint length of the tire being calculated without a footprint length measurement from the sensor.

Clause 10 - the system of clause 9, wherein the machine-readable instructions further cause the computing device to at least: obtain additional acceleration data from the inertial unit; calculate a dynamic vehicle load associated with the tire based upon the additional acceleration data and the virtual footprint length of the tire.

Clause 11 - the system of clause 10, wherein the additional acceleration data is captured after a parameter learning phase during which the virtual footprint length parameters are generated.

Clause 12 - the system of clause 11, wherein the parameter learning phase is conducted upon vehicle startup until convergence of the virtual footprint length parameters.

Clause 13 - the system of any of clauses 9-13, wherein the virtual footprint length of the tire is calculated at a frequency substantially equivalent to a frequency at which the inertial unit reports the acceleration data.

Clause 14 - the system of any of clauses 9-14, wherein the acceleration data comprises lateral axis acceleration data and longitudinal axis acceleration data.

Clause 15 - the system of any of clauses 9-15, wherein the virtual footprint length parameters are generated using a recursive least squares parameter estimation process to generate the virtual footprint length function.

Clause 16 - a non-transitory, computer-readable medium, comprising machine-readable instructions that, when executed by a processor of a computing device, cause the computing device to at least: receive, from a sensor, a plurality of footprint length measurements for a tire; receive, from an inertial unit, a plurality of acceleration data corresponding to a plurality of axes; filter the footprint length data to remove statistical outlier data samples; generate virtual footprint length parameters based upon the plurality of footprint length measurements and the acceleration data; and generate a virtual footprint length function from which a virtual footprint length of the tire can be calculated from the acceleration data, the virtual footprint length of the tire being calculated without a footprint length measurement from the sensor.

Clause 17 - the non-transitory, computer-readable medium of clause 17, wherein the machine-readable instructions further cause the computing device to at least: obtain additional acceleration data from the inertial unit; calculate a dynamic vehicle load associated with the tire based upon the additional acceleration data and the virtual footprint length of the tire.

Clause 18 - the non-transitory, computer-readable medium of any of clauses 16-18, wherein the additional acceleration data is captured after a parameter learning phase during which the virtual footprint length parameters are generated.

Clause 19 - the non-transitory, computer-readable medium of any of clauses 16-18, wherein the parameter learning phase is conducted upon vehicle startup until convergence of the virtual footprint length parameters.

Clause 20 - the non-transitory, computer-readable medium of any of clauses 16-19 wherein the acceleration data comprises lateral axis acceleration data and longitudinal axis acceleration data.

**Claims**

1.   A method comprising:

    receiving, from a sensor, a plurality of footprint length measurements for a tire;
    receiving, from an inertial unit, a plurality of acceleration data corresponding to a plurality of axes;
    filtering the plurality of footprint length measurements to remove statistical outlier data samples;
    generating virtual footprint length parameters based upon the plurality of footprint length measurements and the acceleration data; and
    generating a virtual footprint length function from which a virtual footprint length of the tire can be calculated from the acceleration data, the virtual footprint length of the tire being calculated without a footprint length measurement from the sensor.

2.   The method of claim 1, further comprising:

obtaining additional acceleration data from the inertial unit; and
calculating a dynamic vehicle load associated with the tire based upon the additional acceleration data and the virtual footprint length of the tire.

3.   The method of claim 2, wherein the additional acceleration data is captured after a parameter learning phase during which the virtual footprint length parameters are generated, and, optionally, wherein the parameter learning phase is conducted upon vehicle startup until convergence of the virtual footprint length parameters.

4.   The method of at least one of the previous claims, wherein the virtual footprint length of the tire is calculated at a frequency substantially equivalent to a frequency at which the inertial unit reports the acceleration data; and/or wherein the virtual footprint length parameters are generated using a recursive least squares parameter estimation process to generate the virtual footprint length function.

5.   The method of at least one of the previous claims, wherein the acceleration data comprises lateral axis acceleration data and longitudinal axis acceleration data.

6.   The method of at least one of the previous claims, wherein virtual footprint length function relates the acceleration data from the inertial unit to the footprint length of the tire.

7.   A system comprising:

    a computing device comprising a processor and a memory; and
    machine-readable instructions stored in the memory that, when executed by the processor, cause the computing device to at least:

        receive, from a sensor, a plurality of footprint length measurements for a tire; receive, from an inertial unit, a plurality of acceleration data corresponding to a plurality of axes;
        filter the plurality of footprint length measurements to remove statistical outlier data samples;
        generate virtual footprint length parameters based upon the plurality of footprint length measurements and the acceleration data; and
        generate a virtual footprint length function from which a virtual footprint length of the tire can be calculated from the acceleration data, the virtual footprint length of the tire being calculated without a footprint length measurement from the sensor.

8. The system of claim 7, wherein the machine-readable instructions further cause the computing device to at least:

    obtain additional acceleration data from the inertial unit; and
    calculate a dynamic vehicle load associated with the tire based upon the additional acceleration data and the virtual footprint length of the tire.

9. The system of claim 8, wherein the additional acceleration data is captured after a parameter learning phase during which the virtual footprint length parameters are generated, and, optionally, wherein the parameter learning phase is conducted upon vehicle startup until convergence of the virtual footprint length parameters.

10. The system of at least one of the claims 7 to 9, wherein the virtual footprint length of the tire is calculated at a frequency substantially equivalent to a frequency at which the inertial unit reports the acceleration data; and/or wherein the virtual footprint length parameters are generated using a recursive least squares parameter estimation process to generate the virtual footprint length function.

11. The system of at least one of the claims 7 to 10, wherein the acceleration data comprises lateral axis acceleration data and longitudinal axis acceleration data.

12. A non-transitory, computer-readable medium, comprising machine-readable instructions that, when executed by a processor of a computing device, cause the computing device to at least:

    receive, from a sensor, a plurality of footprint length measurements for a tire;
    receive, from an inertial unit, a plurality of acceleration data corresponding to a plurality of axes;
    filter the plurality of footprint length measurements to remove statistical outlier data samples;
    generate virtual footprint length parameters based upon the plurality of footprint length measurements and the acceleration data; and
    generate a virtual footprint length function from which a virtual footprint length of the tire can be calculated from the acceleration data, the virtual footprint length of the tire being calculated without a footprint length measurement from the sensor.

13. The non-transitory, computer-readable medium of claim 12, wherein the machine-readable instructions further cause the computing device to at least:

    obtain additional acceleration data from the inertial unit; and
    calculate a dynamic vehicle load associated with the tire based upon the additional acceleration data and the virtual footprint length of the tire.

14. The non-transitory, computer-readable medium of claim 12 or 13, wherein the additional acceleration data is captured after a parameter learning phase during which the virtual footprint length parameters are generated; and/or wherein the acceleration data comprises lateral axis acceleration data and longitudinal axis acceleration data.

15. The non-transitory, computer-readable medium of claim 12, 13 or 14, wherein the parameter learning phase is conducted upon vehicle startup until convergence of the virtual footprint length parameters.

**FIG. 1A**

**FIG. 1B**

Computing Environment 203

Data Store 212

Tire Placard Info. 215

Target Pressure 224

Acceleration Data 222

VFL Parameters 223

Pressure Measurement(s) 218

Dynamic Vehicle Load Data 225

Footprint Measurement(s) 221

Dynamic Load Calculation Application 209

Network 206

Inertial Unit 101

Tire(s) 100

Sensor 103

Pressure Regulator 227

# FIG. 2

209  START

Receive footprint length from the sensor  306

Receive acceleration data from inertial unit  309

Filter footprint length data and acceleration data to remove outliers  312

Generate VFL parameters  315

Generate VFL function  318

END

# FIG. 3

209

START

Obtain VFL function 406

Receive acceleration data from inertial unit 409

Calculate dynamic vehicle load data using VFL and acceleration data 412

END

# FIG. 4

## EUROPEAN SEARCH REPORT

Application Number

EP 24 21 6009

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 255 114 B2 (FINK ALEXANDER [DE]; HAAS THOMAS [DE] ET AL.) 28 August 2012 (2012-08-28) * column 4 - column 7; figures 1A-3 * | 1-15 | INV. B60C23/00 B60W40/13 G01G19/08 |
| A | US 2017/355234 A1 (DHARAMSHI PARTHIV [DE] ET AL) 14 December 2017 (2017-12-14) * paragraph [0085] - paragraph [0112]; figure 1 * | 1-15 | |
| A | EP 2 774 784 A1 (GOODYEAR TIRE & RUBBER [US]) 10 September 2014 (2014-09-10) * the whole document * | 1-15 | |

TECHNICAL FIELDS SEARCHED (IPC)

B60C
G01G
B60W

The present search report has been drawn up for all claims

| Place of search | Date of completion of the search | Examiner |
|---|---|---|
| Munich | 26 February 2025 | Billen, Karl |

EPO FORM 1503 03.82 (P04C01)

**ANNEX TO THE EUROPEAN SEARCH REPORT
ON EUROPEAN PATENT APPLICATION NO.**

EP 24 21 6009

This annex lists the patent family members relating to the patent documents cited in  the above-mentioned European search report.
The members are as contained in the European Patent Office EDP file on
The European Patent Office is in no way liable for these particulars which are merely given for the purpose of information.

26-02-2025

| Patent document cited in search report | | Publication date | Patent family member(s) | | Publication date |
|---|---|---|---|---|---|
| US 8255114 | B2 | 28-08-2012 | DE | 102008046269 B3 | 24-12-2009 |
|  |  |  | JP | 5502404 B2 | 28-05-2014 |
|  |  |  | JP | 2010066261 A | 25-03-2010 |
|  |  |  | US | 2010063671 A1 | 11-03-2010 |
| US 2017355234 | A1 | 14-12-2017 | CN | 107000504 A | 01-08-2017 |
|  |  |  | EP | 3237239 A1 | 01-11-2017 |
|  |  |  | GB | 2533658 A | 29-06-2016 |
|  |  |  | US | 2017355234 A1 | 14-12-2017 |
|  |  |  | WO | 2016102379 A1 | 30-06-2016 |
| EP 2774784 | A1 | 10-09-2014 | BR | 102014005211 A2 | 11-11-2014 |
|  |  |  | CN | 104029684 A | 10-09-2014 |
|  |  |  | EP | 2774784 A1 | 10-09-2014 |
|  |  |  | US | 2014257629 A1 | 11-09-2014 |

EPO FORM P0459

For more details about this annex : see Official Journal of the European Patent Office, No. 12/82